# EUROPÄISCHE PATENTSCHRIFT

(11) **EP 2 541 058 B1**
(45) Veröffentlichungstag und Bekanntmachung des Hinweises auf die Patenterteilung: **30.04.2014**
(21) Anmeldenummer: 11172108.0
(22) Anmeldetag: 30.06.2011
(51) Int. Cl.: F03D 11/02, F16H 1/46, F03D 9/00

(54) **Antriebssystem für eine Windkraftanlage**
Drive system for a wind turbine
Système de propulsion pour une éolienne

(43) Veröffentlichungstag der Anmeldung: 02.01.2013
(73) Patentinhaber: Siemens Aktiengesellschaft, 80333 München (DE)
(72) Erfinder: Reimers, Jan-Dirk, 52074 Aachen (DE); Dinter, Ralf Martin, Dr., 45888 Gelsenkirchen (DE); Klein-Hitpass, Arno, 52074 Aachen (DE)

(56) Entgegenhaltungen:
- DE-A1-102004 022 299
- DE-B3- 10 318 945
- JP-A- 8 312 522
- US-A1- 2010 062 888
- US-A1- 2011 068 583

## Beschreibung

Ein Großmaschinenantriebstrang für Windkraftanlagen oder Mühlen umfaßt üblicherweise Systemkomponenten, wie Netzanbindungselemente, Motoren bzw. Generatoren, Kupplungen, Getriebe und Antriebswellen. Netzseitig sind vielfach Umrichter vorgesehen. Bremsen sind oft in Form von mechanischen Bremsen an schnellaufenden Welle zwischen Getriebe und Motor bzw. Generator vorgesehen, da dort Bremsmomente übersetzungsbedingt kleiner sind.

Die US 2010/062 888 wird als nächst liegenden Stand der Technik angesehen.

Aus EP 2 031 273 A2 ist eine Generator-Getriebe-Einheit bekannt, bei der ein Rotor des Generators mittels einer zwischen einer inneren Rotorhohlwelle und einem Gehäusestutzen vorgesehenen Lageranordnung gelagert ist. Spulen- bzw. Magnetanordnungen des Rotors umgeben den Gehäusestutzen radial. Zwischen der inneren Rotorhohlwelle und einer Sonnenwelle ist eine Kupplung vorgesehen. Die Sonnenwelle verfügt über keine eigenen Lager, sondern ist über die Lageranordnung des Rotors gelagert.

EP 1 045 139 A2 offenbart eine Windkraftanlage mit einem Rotor, dessen Rotornabe in einem auf einem Rotorträger angeordneten Wälzlager gelagert und mit einem zweistufigen, eine Antriebsstufe und eine Abtriebsstufe aufweisenden Planetengetriebe verbunden ist. Eine Ausgangswelle der Planetenstufe ist über eine Kupplung an einen Generator gekoppelt. Ein Innenring des Wälzlagers ist mit der Rotornabe und rotierenden Teilen des Planetengetriebes lösbar verbunden. Darüber hinaus ist ein Gehäuse des Generators mit dem Planetengetriebe lösbar zu einem Triebstrangmodul verbunden. Das Triebstrangmodul ist auf dem Rotorträger abgestützt und dadurch dynamisch entkoppelt.

Aus der älteren europäischen Patentanmeldung mit dem Anmeldeaktenzeichen 10003558.3 ist eine Antriebsvorrichtung für eine Windkraftanlage bekannt, die mindestens 2 zumindest dreischenklige Trägerelemente zur Lagerung von zumindest 3 Ritzelwellen umfaßt. Die Ritzelwellen sind jeweils mittels an Eckpunkten der Trägerelemente angeordneten Ritzelwellenlagern gelagert. Die Ritzelwellenlager sind durch Lagersitzelemente an den Trägerelementen befestigt. Mindestens ein Trägerelement ist zusätzlich zur Lagerung einer mit einer Rotornabe verbindbaren Anschlußwelle ausgestaltet, die von diesem Trägerelement umgeben ist und deren Achse durch den Mittelpunkt des Trägerelements verläuft. Eine erste Getriebestufe der erfindungsgemäßen Antriebsvorrichtung weist ein außenverzahntes Zentralrad auf. Das Zentralrad ist auf der Anschlußwelle befestigt und kämmt mit zumindest 3 Ritzeln der ersten Getriebestufe, die an ersten Enden der Ritzelwellen angeordnet sind. An zweiten Enden der Ritzelwellen sind zumindest 3 Zahnräder einer zweiten Getriebestufe angeordnet, die mit einem Zentralritzel der zweiten Getriebestufe kämmen.

WO 2008/031694 A1 offenbart ein Mühlenantriebssystem mit einem unterhalb eines Mahltellers anordenbaren Getriebe. Das Getriebe umfaßt zumindest eine Planetenstufe und weist eine vertikale Wellenlage auf. In ein Gehäuse des Getriebes ist ein elektrischer Motor integriert, der an einen Schmierstoffversorgungskreislauf des Getriebes angeschlossen ist, dessen Rotor und Stator sich vertikal erstreckende Achsen aufweisen und dessen Kühlung mittels durch das Getriebe zirkulierenden Schmierstoffs erfolgt.

In EP 2 295 147 A1 ist ein Mühlenantriebssystem mit einem unterhalb eines Mahltellers anordenbaren Getriebe mit zumindest einer Planeten- bzw. Stirnradstufe sowie einem in ein Gehäuse des Getriebes integrierten elektrischen Motor beschrieben. Außerdem umfaßt das Mühlenantriebssystem einen Umrichter mit einer zugeordneten Regelungseinrichtung zur verzahnungsspielfreien Drehzahlregelung des Motors.

Aus der älteren europäischen Patentanmeldung mit dem Anmeldeaktenzeichen 11155822.7 ist ein Getriebemotor für ein Mühlenantriebssystem bekannt, das einen unterhalb oder seitlich eines Mahltellers anordenbares Getriebe mit zumindest einer Planeten- bzw. Stirnradstufe umfaßt, das eine vertikale oder horizontale Wellenlage aufweist. In ein Gehäuse des Getriebes ist ein elektrischer Motor integriert, dessen Rotor und Stator sich parallel zur Wellenlage des Getriebes erstreckende Achsen aufweisen. Ein oberer Lagerdeckel und ein unterer Lagerdeckel sind an gegenüberliegenden Stirnseiten an Rotor bzw. Stator montiert und umfassen Lagersitze für Rotorwellenlager. Zwischen dem unteren Lagerdeckel und einem Bodenteil des Gehäuses ist eine Auffangwanne für Kühlmittel gebildet. Zwischen einem Hohlrad des Getriebes und dem Gehäuse oder radial zwischen einer Rotorwelle und einem Rotorträger, an dem Rotorwicklungen bzw. Rotormagnete befestigt sind, ist ein Drehschwingungsdämpfer angeordnet, der einen Primärteil und einen drehelastisch mit dem Primärteil verbundenen Sekundärteil umfaßt.

In der älteren europäischen Patentanmeldung mit dem Anmeldeaktenzeichen 11002782.8 ist ein Antriebssystem für eine Windkraftanlage beschrieben, das eine zumindest eine Planetenradstufe, die ein Hohlrad, mehrere Planetenräder, einen Planetenträger und ein Sonnenrad aufweist, umfassende Getriebeeinheit aufweist. Des weiteren ist eine der Getriebeeinheit zugeordnete erste Welle vorgesehen, die einen mit einer Arbeitsmaschinen- oder Rotorwelle verbindbaren Kupplungsflansch aufweist und über den Planetenträger gelagert ist. Die Getriebeeinheit und eine mit einer zweiten Welle der Getriebeeinheit verbundene Motor- oder Generatoreinheit sind von einem Getriebegehäuse umgeben, das eine kardanische umfangssymmetrische oder teilsymmetrische Aufhängung zur Verbindung mit einem tragenden Strukturelement der Windkraftanlage aufweist.

Der vorliegenden Erfindung liegt die Aufgabe zugrunde, ein montagefreundliches Antriebssystem für eine Windkraftanlage anzugeben.

Diese Aufgabe wird erfindungsgemäß durch ein Antriebssystem mit den in Anspruch 1 angegebenen Merkmalen gelöst. Vorteilhafte Weiterbildungen der vorliegenden Erfindung sind in den abhängigen Ansprüchen angegeben.

Das erfindungsgemäße Antriebssystem weist eine zumindest eine Planetenradstufe, die ein Hohlrad, mehrere Planetenräder, einen Planetenträger und ein Sonnenrad aufweist, umfassende Getriebeeinheit auf. Des weiteren ist eine der Getriebeeinheit zugeordnete erste Welle vorgesehen, die einen mit einer Arbeitsmaschinen- oder Rotorwelle verbindbaren Kupplungsflansch aufweist und über den Planetenträger gelagert ist. Die Getriebeeinheit und eine mit einer zweiten Welle der Getriebeeinheit verbundene Motor- oder Generatoreinheit sind von einem Getriebegehäuse umgeben. Außerdem umfaßt die Motor- oder Generatoreinheit einen drehfest mit einer Rotorhohlwelle verbundenen Rotor.

Zwischen der Rotorhohlwelle und der zweiten Welle der Getriebeeinheit ist erfindungsgemäß eine elektrisch isolierende, lösbare Flanschverbindung angeordnet, deren getriebeseitiges Ende mit einer Getriebehohlwelle verbunden ist. Ein motor- oder generatorseitiger Endabschnitt der zweiten Welle der Getriebeeinheit ist von der Getriebehohlwelle konzentrisch umgeben und mit dieser über eine innerhalb der Getriebehohlwelle angeordnete Kupplung oder Spannverbindung verbunden. Zwischen Getriebeeinheit und Motor- oder Generatoreinheit ist ein Getriebegehäusestutzen angeordnet, der einen getriebeseitigen Endabschnitt der Getriebehohlwelle konzentrisch umgibt und einen Lagersitz für eine der zweiten Welle der Getriebeeinheit zugeordnete Lageranordnung bildet. Mittels dieser Lageranordnung ist auch die Rotorhohlwelle gelagert. Das erfindungsgemäße Antriebssystem weist dadurch eine sehr kompakte Bauweise auf. Darüber hinaus ermöglicht es insbesondere aufgrund der lösbaren Flanschverbindung zwischen der zweiten Welle der Getriebeeinheit und der Rotorhohlwelle eine montagefreundliche Ausführung einer Generator/Motor-Getriebe-Einheit. Außerdem ist ein motor- bzw. generatorseitiges Planetenträgerlager beim erfindungsgemäßen Antriebssystem grundsätzlich generator- bzw. motorseitig einstellbar.

Vorzugsweise sind die Rotorhohlwelle und die zweite Welle der Getriebeeinheit im wesentlichen ausschließlich mittels der Lageranordnung am Getriebegehäusestutzen gelagert. Dies ermöglicht einen besonders kompakten und wartungsfreundlichen Aufbau.

Die Getriebehohlwelle kann mit der zweiten Welle der Getriebeeinheit beispielsweise durch eine Zahnkupplung mit Kurz- oder Bogenverzahnung verbunden sein. Alternativ dazu kann die Getriebehohlwelle mit der zweiten Welle der Getriebeeinheit durch einen Innenspannsatz verbunden sein. Der Innenspannsatz umfaßt dabei beispielsweise zumindest jeweils einen Außenring und einen Innenring, die zueinander korrespondierende konische Kontaktflächen aufweisen und mittels mehrerer sich axial erstreckender Spannschrauben gegeneinander verspannbar sind. Durch Verspannung des zumindest einen Außenrings und des zumindest einen Innenrings können entsprechend einer bevorzugten Ausgestaltung der vorliegenden Erfindung sowohl die zweite Welle der Getriebeeinheit und die Getriebehohlwelle als auch die Getriebehohlwelle und ein Aufsteckflansch miteinander verbunden werden, der mit einem rotorseitigen Ende der Flanschverbindung lösbar verbunden ist. Dies ergibt eine verbesserte Montagefreundlichkeit. Alternativ zu einer Zahnkupplung oder einem Innenspannsatz kann die Getriebehohlwelle mit der zweiten Welle der Getriebeeinheit durch einen Außenspannsatz verbunden sein.

Entsprechend einer vorteilhaften Weiterbildung der vorliegenden Erfindung ist die zweite Welle der Getriebeeinheit axial im wesentlichen zur Hälfte von der Getriebehohlwelle umgeben. Auf diese Weise kann die Lageranordnung der Getriebehohlwelle axial zwischen der Kupplung oder Spannverbindung und einem drehfest mit der zweiten Welle der Getriebeeinheit verbundenen Sonnenrad angeordnet werden. Dies ermöglicht eine Entkopplung der Lageranordnung gegenüber auf die zweite Welle der Getriebeeinheit einwirkenden Zwangskräften.

Entsprechend einer bevorzugten Weiterbildung der vorliegenden Erfindung umfaßt die Lageranordnung der Getriebehohlwelle am Getriebegehäusestutzen ein doppelreihiges Lager in X-Anordnung. Hierdurch kann die Getriebehohlwelle ohne Wellenmutter gefertigt werden, da die Getriebehohlwelle nicht zur Lagerspieleinstellung verwendet werden muß. Dies kann statt dessen über einen äußeren Lagerdeckel erfolgen.

Vorzugsweise ist der Getriebegehäusestutzen an einen zwischen Getriebeeinheit und Motor- oder Generatoreinheit angeordneten Gehäusezwischenflansch angeformt. Dabei kann der Gehäusezwischenflansch einen Lagersitz für ein motor- oder generatorseitiges Planetenträgerlager aufweisen. Außerdem können am Gehäusezwischenflansch insbesondere ein Statormantel der Motor- oder Generatoreinheit sowie ein Hohlrad einer motor- oder generatorseitigen Planetenradstufe montiert sein. Darüber hinaus kann der Gehäusezwischenflansch jeweils einen Flanschfortsatz aufweisen, an dem jeweils der Statormantel bzw. das Hohlrad der motor- oder generatorseitigen Planetenradstufe montiert ist. In vorteilhafter Weise sind beide Flanschfortsätze hinsichtlich ihrer Durchmesser derart abgestuft, daß sie in einer vergleichbaren Größenordnung liegen, wobei der Flanschfortsatz für den Statormantel der größere von beiden ist. Bei gewichtsoptimierter Bauform kann der Flanschfortsatz für das Hohlrad der motor- oder generatorseitigen Planetenradstufe innenliegend ausgerichtet und gegen den Gehäusezwischenflansch verschraubt sein. Entsprechend einer weiteren Ausgestaltung der vorliegenden Erfindung sind der dem Statormantel zugeordnete Flanschfortsatz und der dem Hohlrad zugeordnete Flanschfortsatz axial voneinander beabstandet.

Entsprechend einer besonders bevorzugten Weiterbildung der vorliegenden Erfindung ist der Kupplungsflansch mit der Arbeitsmaschinen- oder Rotorwelle elastisch verbindbar. Auf diese Weise ist eine kardanische Ankupplung einer Arbeitsmaschine oder Rotorwelle möglich, insbesondere mit Winkelversatz. Eine solche Ankupplung kann beispielsweise mittels elastischer Bolzen realisiert sein. Des weiteren weist vorteilhafterweise auch das Getriebegehäuse eine kardanische umfangssymmetrische oder teilsymmetrische Aufhängung zur Verbindung mit einem tragenden Strukturelement der Windkraftanlage auf. Das tragende Strukturelement kann beispielsweise ein Fundamentlager mit einer Anbindung an einen Rahmen oder eine Gondel der Windkraftanlage sein. Durch eine doppel- oder vollkardanische Aufhängung des Antriebssystems innerhalb des tragenden Strukturelements und durch eine kardanische Anbindung des Kupplungsflansches können lager- bzw. verzahnungsschädigende Einflüsse vermieden werden. Aufgrund von Hauptrahmenverformungen einer Windkraftanlage entstehende Verschiebungen in Fundamentauflagern, die entsprechend bisherigen Lösungen über eine Aufhängung eines Antriebstrangs in diesen eingekoppelt werden, führen somit nicht zu unerwünschten Zwangskräften, sondern werden durch die kardanische Aufhängung vermieden. Damit ist das Antriebssystem lediglich Torsionsbelastungen ausgesetzt.

Bei Verwendung des erfindungsgemäßen Antriebssystems in einer Windkraftanlage ist die Getriebeeinheit mit einer Generatoreinheit verbunden. Des weiteren ist die erste Welle der Getriebeeinheit in diesem Fall eine getriebeseitige Antriebswelle. Die zweite Welle der Generatoreinheit ist dagegen eine getriebeseitige Abtriebswelle. Der Kupplungsflansch der getriebeseitigen Antriebswelle ist bei Verwendung des erfindungsgemäßen Antriebssystems in einer Windkraftanlage mit einer Rotorwelle verbindbar.

Die vorliegende Erfindung wird nachfolgend an einem Ausführungsbeispiel anhand der Zeichnung näher erläutert. Es zeigt
- Figur 1: eine perspektivische Schnittdarstellung eines erfindungsgemäßen Antriebssystems für eine Windkraftanlage,
- Figur 2: eine Schnittdarstellung des in Figur 1 dargestellten Antriebssystems mit Getriebe- und Generatoreinheit,
- Figur 3: eine Schnittdarstellung einer ersten Variante eines Gehäusezwischenflansches zwischen Getriebe- und Generatoreinheit,
- Figur 4: eine Schnittdarstellung einer zweiten Variante eines Gehäusezwischenflansches zwischen Getriebe- und Generatoreinheit,
- Figur 5: eine schematische Darstellung eines Antriebssystems für eine Windkraftanlage einschließlich Netzanbindung,
- Figur 6: eine Ringstütze zur vollkardanischen Aufhängung des Antriebssystems gemäß Figur 1 mit einer korrespondierenden zweiarmige Drehmomentstütze,
- Figur 7: zwei Ringsegmentstützen zur vollkardanischen Aufhängung des Antriebssystems gemäß Figur 1 mit korrespondierenden Drehmomentstützen,
- Figur 8: zwei Ringsegmentstützen in einer gegenüber Figur 7 abgewandelten Variante.

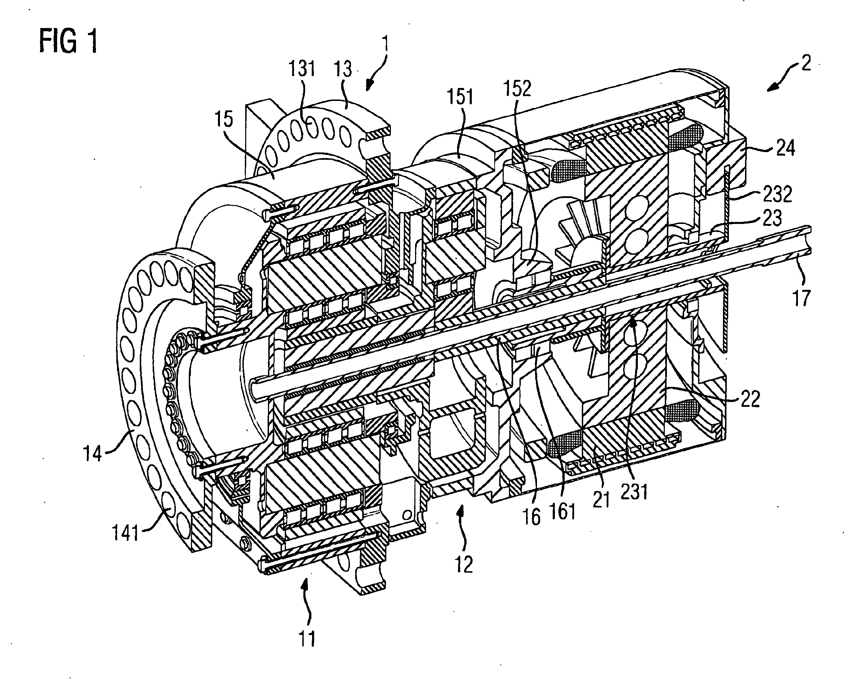

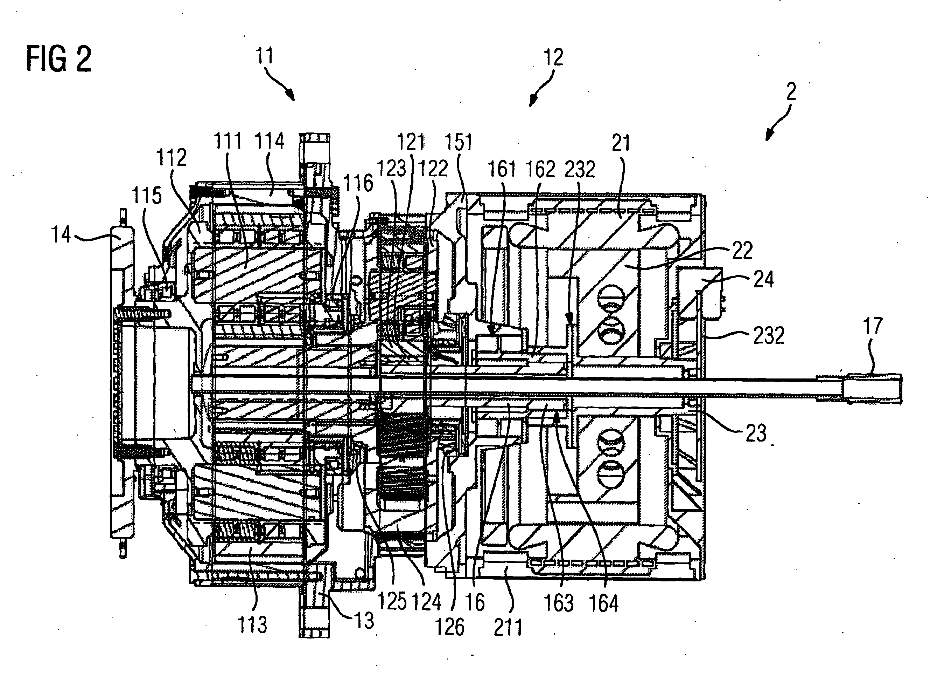

Das in Figur 1 dargestellte Antriebssystem für eine Windkraftanlage weist ein Getriebeeinheit 1 mit einer ersten 11 und zweite Planetenradstufe 12 in koaxialer Bauform auf. Wie auch der Schnittdarstellung gemäß Figur 2 zu entnehmen ist, umfaßt jede Planetenradstufe 11, 12 jeweils ein Hohlrad 114, 124, mehrere Planetenräder 113, 123, einen Planetenträger 112, 122 und ein Sonnenrad 111, 121. Die Getriebeeinheit 1 ist über eine Abtriebswelle 16 der Getriebeeinheit mit einer Generatoreinheit 2 verbunden und gemeinsam mit dieser in einem Getriebegehäuse 15 angeordnet. Der Getriebeeinheit 1 ist eine an den Planetenträger 112 der ersten Planetenradstufe 11 angeformte Antriebswelle zugeordnet, die einen mit einer Rotorwelle verbindbaren Kupplungsflansch 14 aufweist und über den Planetenträger 112 der ersten Planetenradstufe 11 gelagert ist. Dem Planetenträger 112 der ersten Planetenradstufe 11 sind zwei zwischen Planetenträgerwangen und Getriebegehäuse 15 angeordnete Lager 115 und 116 zugeordnet, die ein erstes und ein zweites Hauptlager der Getriebeeinheit 1 darstellen. In entsprechender Weise ist der Planetenträger 122 der zweiten Planetenradstufe 12 durch zwei zwischen Planetenträgerwangen und Getriebegehäuse 15 angeordnete Lager 125 und 126 gelagert.

Die Generatoreinheit 2 umfaßt einen Stator 21 und einen drehfest mit einer Rotorhohlwelle 23 verbundenen Rotor 22. Die Rotorhohlwelle 23 umgibt einen generatorseitigen Endabschnitt der Abtriebswelle 16 konzentrisch und ist mit diesem über eine innerhalb der Rotorhohlwelle 23 angeordnete Kupplung oder Spannverbindung 232 verbunden. Die Rotorhohlwelle 23 ist axial von der Abtriebswelle 16 der Getriebeeinheit 1 beabstandet angeordnet bzw. schließt sich axial an diese an. Zwischen der Rotorhohlwelle 23 und der Abtriebswelle 16 der Getriebeeinheit 1 ist eine elektrisch isolierende, lösbare Flanschverbindung 231 angeordnet, deren getriebeseitiges Ende mit einer Getriebehohlwelle 162 verbunden ist. Ein generatorseitiger Endabschnitt der Abtriebswelle 16 der Getriebeeinheit 1 ist von der Getriebehohlwelle 162 konzentrisch umgeben und mit dieser über eine innerhalb der Getriebehohlwelle 162 angeordnete Kupplung oder Spannverbindung 163 verbunden. Zwischen Getriebeeinheit 1 und Generatoreinheit 2 ist ein Getriebegehäusestutzen 152 angeordnet. Dieser Gehäusestutzen 152 umgibt einen getriebeseitigen Endabschnitt der Getriebehohlwelle 162 konzentrisch und bildet einen Lagersitz für eine der Abtriebswelle 16 der Getriebeeinheit 1 zugeordnete Lageranordnung 161. Mittels dieser Lageranordnung 161 ist auch die Abtriebswelle 16 gelagert. Innerhalb der Abtriebswelle 16 und der Rotorhohlwelle 23 ist im vorliegenden Ausführungsbeispiel ein Pitch-Rohr 17 angeordnet, das sich axial über das gesamte Antriebssystem erstreckt.

Entsprechend der Schnittdarstellung gemäß Figur 2 ist ein rotorseitiges Ende der Flanschverbindung 231 an die Rotorhohlwelle 23 angeformt. An einem getriebeseitigen Ende der Getriebehohlwelle 162 ist ein mit dem rotorseitigen Ende der Flanschverbindung 231 lösbar verbundener Aufsteckflansch 164 montiert. Des weiteren ist die Abtriebswelle 16 der Getriebeeinheit 1 axial im wesentlichen zur Hälfte von der Generatorhohlwelle 162 umgeben. Die am Getriebegehäusestutzen 152 angeordnete Lageranordnung 161 ist dabei axial etwa mittig auf die mit dem Sonnenrad 121 der zweiten Planetenradstufe 12 verbundene Abtriebswelle 16 der Getriebeeinheit 1 ausgerichtet.

Die Lageranordnung 161 der Abtriebswelle 16 am Gehäusestutzen 152 umfaßt vorzugsweise ein doppelreihiges Lager in X-Anordnung. Darüber hinaus sind die Rotorhohlwelle 23 und die Abtriebswelle 16 der Getriebeeinheit 1 entsprechend einer besonders bevorzugten Ausführungsform ausschließlich mittels der Lageranordnung 161 am Gehäusestutzen 152 gelagert. Ein in den Figur 2 dargestelltes hinteres Rotorhohlwellenlager 234 an einer von der Getriebeeinheit 1 abgewandten Stirnseite der Generatoreinheit 2 ist also nicht zwingend erforderlich und kann grundsätzlich entfallen.

An der Rotorhohlwelle 23 ist im vorliegenden Ausführungsbeispiel an der von der Getriebeeinheit 1 abgewandten Stirnseite der Generatoreinheit 2 eine Bremsscheibe 233 drehfest montiert. Die Bremsscheibe 233 ist damit für Wartungszwecke einfach zugänglich. Ein der Bremsscheibe 233 zugeordneter Bremssattel 24 ist an dem von der Getriebeeinheit 1 abgewandt angeordneten Gehäusedeckel 153 befestigt.

Die Getriebehohlwelle 162 kann mit der Abtriebswelle 16 der Getriebeeinheit 1 durch eine Zahnkupplung 163 mit Kurz- oder Bogenverzahnung verbunden sein. Alternativ dazu kann die Getriebehohlwelle 162 mit der Abtriebswelle 16 der Getriebeeinheit 1 auch durch einen Innenspannsatz verbunden sein. Der Innenspannsatz umfaßt dabei zumindest jeweils einen Außenring und einen Innenring, die zueinander korrespondierende konische Kontaktflächen aufweisen und mittels mehrerer sich axial erstreckender Spannschrauben gegeneinander verspannt werden können. Durch Verspannung des zumindest einen Außenrings und des zumindest einen Innenrings können entsprechend einer bevorzugten Ausführungsform sowohl die Abtriebswelle 16 der Getriebeeinheit 1 und die Getriebehohlwelle 162 als auch die Getriebehohlwelle 162 und der Aufsteckflansch 164 miteinander verbunden werden, beispielsweise kraftschlüssig. Die Getriebehohlwelle 162 kann beispielsweise durch eine Verspannung des Außen- und Innenrings aufgeweitet werden. Dies führt dann zu einer kraftschlüssigen Verbindung zwischen Getriebehohlwelle 162 und Aufsteckflansch 164. Der Aufsteckflansch 164 kann beispielsweise auch mittels einer Paßfederverbindung, die axial auf den Innenspannsatz ausgerichtet ist, mit der Getriebehohlwelle 162 verbunden werden.

Alternativ zu einer Zahnkupplung oder zu einem Innenspannsatz kann die Getriebehohlwelle 162 mit der Abtriebswelle 16 der Getriebeeinheit 1 durch einen Außenspannsatz verbunden sein. In diesem Fall ist ein rotorseitiges Ende der Flanschverbindung 231 beispielsweise an einen Flansch des Außenspannsatzes angeschraubt und über diesen mit der Getriebehohlwelle 162 verbunden. Vorteilhafterweise ist bei Verwendung eines Außenspannsatzes am generatorseitigen Endabschnitt der Abtriebswelle 16 der Getriebeeinheit 1 ein Flansch vorgesehen.

Der die Lageranordnung 161 der Abtriebswelle 23 konzentrisch umgebende Gehäusestutzen 152 ist im vorliegenden Ausführungsbeispiel an einen zwischen Getriebeeinheit 1 und Generatoreinheit 2 angeordneten Gehäusezwischenflansch 151 angeformt. Am Gehäusezwischenflansch 151 ist sowohl ein Statormantel 211 der Generatoreinheit 2 als auch das Hohlrad 124 der zweiten Planetenradstufe 12 montiert. Zusätzlich weist der Gehäusezwischenflansch 151 einen Lagersitz für ein generatorseitiges Planetenträgerlager 126 der zweiten Planetenradstufe 12 auf.

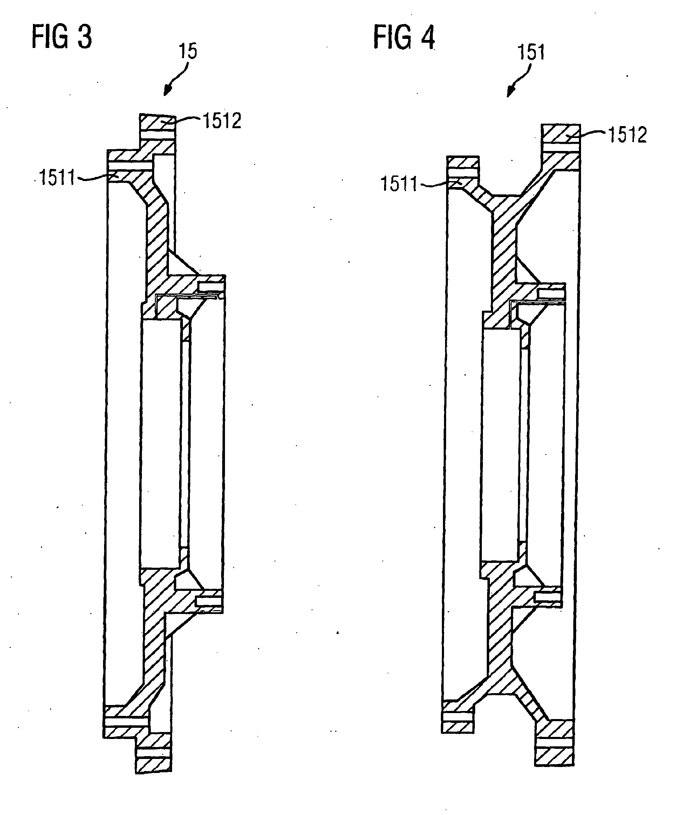

Entsprechend Figur 3 weist der Gehäusezwischenflansch 151 jeweils einen Flanschfortsatz 1511, 1512 auf, an dem der Statormantel 211 bzw. das Hohlrad 124 der zweiten Planetenradstufe 12 montiert ist. In Figur 4 ist eine Variante eines Gehäusezwischenflansches 151 dargestellt, bei welcher der dem Statormantel 211 zugeordnete Flanschfortsatz 1512 und der dem Hohlrad 124 zugeordnete Flanschfortsatz 1511 axial voneinander beabstandet sind.

Das Getriebegehäuse 15 weist eine vollkardanische umfangssymmetrische oder teilsymmetrische Aufhängung 13 zur Verbindung mit einem tragenden Strukturelement der Windkraftanlage aufweist. Dieses tragende Strukturelement ist beispielsweise ein Rahmen oder eine Gondel der Windkraftanlage.

Die zweite Planetenradstufe 12 ist hinsichtlich ihrer Übersetzung derart dimensioniert, daß sich bei Wahl einer durch 3 teilbaren Generatorpolzahl sowie bei optimaler Auslegung für Nenndrehzahl im wesentlichen identische Außendurchmesser von Stator der Generatoreinheit 2 und Hohlrad 124 der zweiten Planetenradstufe 12 ergeben. Generatorseitige Lager der Getriebeeinheit 1 sind elektrisch isolierend ausgeführt. Damit kann ein Stromfluß von der Getriebeeinheit 1 in einen Rotor der Generatoreinheit 2 vermieden werden.

Durch die vollkardanischen Aufhängung des Antriebssystems in Kombination mit einer Transversal- und Radialkraftfreiheit und einer Zweipunkt- bzw. Momentenlagerung des Antriebssystems entsteht ein Antriebstrang, der nur noch mit Torsion beaufschlagt wird. Durch ein gehäuseseitiges Zusammenfügen von Getriebeeinheit 1 und Generatoreinheit 2 unter Ausnutzung ihrer hohen Steifigkeit kann trotz deutlich weniger steifer Auflagerelemente in der kardanischen Aufhängung zumindest eine deutliche Reduktion von Zwangskräften im Antriebsstrang erzielt werden.

Durch Kombination der Zweipunkt- bzw. Momentenlagerung des Antriebssystems mit der vollkardanischen Aufhängung des auch die Generatoreinheit 2 umfassenden Getriebegehäuses 15 wird eine zwischen Getriebeeinheit 1 und Generatoreinheit 2 angeordnete Kupplung deutlich weniger belastet. Diese Kupplung kann daher erheblich steifer ausgeführt werden. Dies bietet wiederum weitere Vorteile in bezug auf Betriebsdynamik.

Eine Ausgestaltung der Hauptlager der Getriebeeinheit 1 kann weiterhin ohne Berücksichtigung von Auflagern nachfolgender Komponenten erfolgen. Dadurch wird ein Einsatz von Momentenlagern, die lediglich einen deutlich verringerten Bauraum benötigen, für die Hauptlager der Getriebeeinheit 1 in einer technisch beherrschbaren Form für Großantriebe möglich. Darüber hinaus ist eine torsionsbedingte Wellenflucht-Verdrillung erfindungsgemäß durch die vollkardanische Aufhängung für die Getriebeeinheit 1 schädigungsirrelevant geworden.

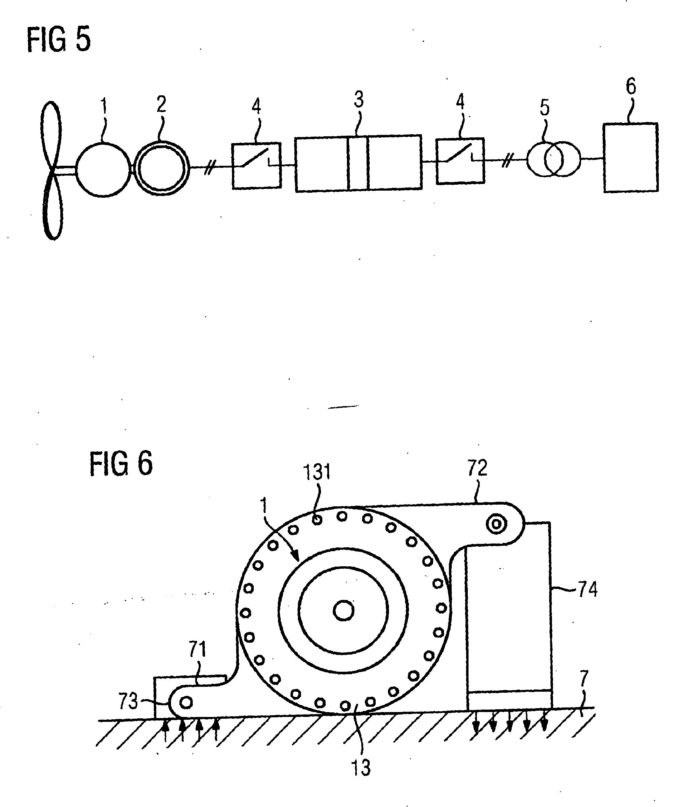

Die Generatoreinheit 2 weist im vorliegenden Ausführungsbeispiel 3 unabhängige Wicklungssysteme auf, die an einen in Figur 5 dargestellten Vollumrichter 3 angeschlossen sind. Der Vollumrichter 3 ermöglicht eine netzdynamische Entkopplung und ist über Lasttrennschalter 4 an die Generatoreinheit 2 einerseits sowie andererseits an einen Transformator 5 zur Leistungseinspeisung in ein Energieversorgungsnetz 6 angeschlossen. Darüber hinaus sind für jeden Pol getrennt solierte Generatorwicklungen vorgesehen. Des weiteren sind die 3 unabhängigen Wicklungssysteme außerhalb des die Generatoreinheit 2 umgebenden Getriebegehäuses 15 verschaltet. Die Generatoreinheit ist 9- bis 30-polig ausgestaltet, bevorzugt 12- bis 24-polig.

Entsprechend dem in Figur 6 dargestellten Ausführungsbeispiel ist die vollkardanische Aufhängung 13 durch eine das Getriebegehäuse 15 vollumfänglich radial umgebende Ringstütze gebildet. Die Ringstütze 13 weist in Umfangsrichtung mehrere im wesentlichen äquidistant angeordnete Bohrungen 131 auf, in die elastische Bolzen mit jeweils einem ersten Endabschnitt eingesetzt sind. Die elastischen Bolzen sind mit einer korrespondierenden Drehmomentstütze am tragenden Strukturelement 7 der Windkraftanlage verbunden. Die korrespondierende Drehmomentstütze umfaßt ebenfalls ein Ringelement mit in Umfangsrichtung im wesentlichen äquidistant angeordneten Bohrungen, in welche die elastischen Bolzen mit einem zweiten Endabschnitt eingesetzt sind. Außerdem weist die korrespondierende Drehmomentstütze entsprechend dem in Figur 6 dargestellten Ausführungsbeispiel zwei asymmetrisch angeformte Stützarme 71, 72 auf, die jeweils mit einem Endabschnitt in eine Aufnahme 73, 74 am tragenden Strukturelement 7 eingesetzt und dort mit diesem verbunden sind.

Die elastischen Bolzen der vollkardanischen Aufhängung 13 sind axial demontierbare Elastomerbolzen. Auch der Kupplungsflansch 14 weist entsprechend Figur 1 in Umfangsrichtung mehrere im wesentlichen äquidistant angeordnete Bohrungen 141 auf, in die axial demontierbare Elastomerbolzen eingesetzt sind, die mit einem korrespondierenden Rotorwellenkupplungsflansch verbunden sind. Bei demontierten Elastomerbolzen der vollkardanischen Aufhängung 13 und des Kupplungsflansches 14 ist eine hinsichtlich einer Wellenanordnung der Getriebeeinheit 1 radiale Aus- bzw. Einbaurichtung des Antriebssystems freigegeben.

Zusatzaggregate der Getriebeeinheit 1, beispielsweise Ölanlage, Kühler und Hydraulik, sind vorteilhafterweise direkt am tragenden Strukturelement 7 der Windkraftanlage montiert. Über die vollkardanische Aufhängung 13 sowie eine elastische Kupplung zwischen Rotorwelle und Antriebswelle der Getriebeeinheit 1 sind die Zusatzaggregate damit vom Getriebegehäuse 15 entkoppelt.

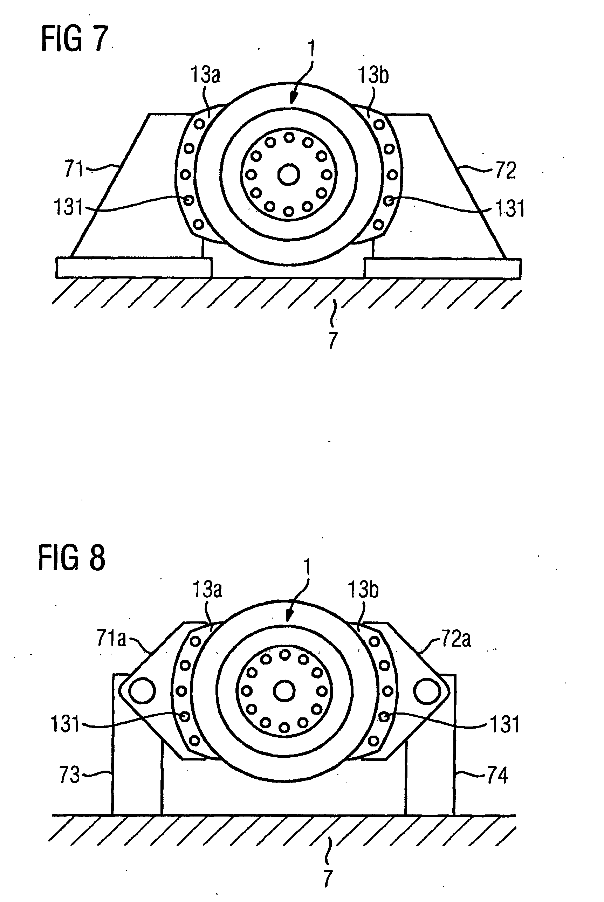

In Figur 7 und 8 sind jeweils zwei Ringsegmentstützen 13a, 13b zur teilumfänglichen vollkardanischen Aufhängung des Antriebssystems dargestellt. Die Ringsegmentstützen 13a, 13b weisen jeweils in Umfangsrichtung mehrere im wesentlichen äquidistant angeordnete Bohrungen 131 auf, in die elastische Bolzen eingesetzt sind. Zusätzlich sind die elastischen Bolzen mit korrespondierenden Drehmomentstützen 71, 72 am tragenden Strukturelement 7 der Windkraftanlage verbunden. Entsprechend dem in Figur 7 dargestellten Ausführungsbeispiel sind die korrespondierenden Drehmomentstützen 71, 72 direkt am tragenden Strukturelement 7 der Windkraftanlage befestigt. Dagegen umfassen die korrespondierende Drehmomentstützen entsprechend dem in Figur 8 dargestellten Ausführungsbeispiel jeweils einen Stützarm 71a, 72a, der mit einem Endabschnitt in eine Aufnahme 73, 74 am tragenden Strukturelement eingesetzt und dort mit diesem verbunden ist. Damit bleibt eine Einbaufähigkeit wie eine herkömmliche Zweiarmstütze erhalten, ohne daß hierzu eine Hauptrahmenanpassung an der Windkraftanlage erforderlich ist. Da eine Zwangskraftfreiheit bereits gegeben ist, können bekannte Elastomerauflager verwendet werden, die vorzugsweise vollständig entsprechend schwingungsdämpfenden Kriterien ausgelegt sind.

Sowohl bei dem in Figur 7 dargestellten Ausführungsbeispiel als auch bei dem in Figur 8 dargestellten Ausführungsbeispiel umfassen die korrespondierenden Drehmomentstützen am tragenden Strukturelement 7 jeweils ein Ringsegment mit in Umfangsrichtung im wesentlichen äquidistant angeordneten Bohrungen 131. In diesen Bohrungen 131 werden die elastischen Bolzen eingesetzt, die ebenso wie beim Ausführungsbeispiel entsprechend Figur 6 als axial demontierbare Elastomerbolzen ausgestaltet sein können. Vorzugsweise schneiden sich Symmetrieachse der Drehmomentstützen und Drehachse des Antriebssystems.

Darüber hinaus kann der Kupplungsflansch entsprechend einer weiteren Ausführungsform mehrere zueinander versetzte Bohrungsreihen aufweisen, in deren Bohrungen axial demontierbare Elastomerbolzen eingesetzt sind. Dadurch kann der Kupplungsflansch hinsichtlich seines Außendurchmessers bei gleichen Bohrungsabständen verkleinert ausgeführt werden.

Des weiteren können die Elastomerbolzen unterschiedliche, entsprechend Durchmesser und Flanschart angepaßte Steifigkeiten aufweisen. Insbesondere der Kupplungsflansch mit im Vergleich zur Aufhängung kleinerem Durchmesser kann aus härterem Material sein, während die Aufhängung aus weicherem Material gefertigt sein kann.

Die Verwendung des beschriebenen Antriebssystems ist nicht nur auf Windkraftanlagen beschränkt, sondern beispielsweise auch in Mühlenantriebssystemen denkbar, bei denen die Generatoreinheit durch eine Motoreinheit ersetzt wird.

## Patentansprüche

1. Antriebssystem für eine Windkraftanlage mit
- einer zumindest eine Planetenradstufe (11, 12), die ein Hohlrad (114, 124), mehrere Planetenräder (113, 123), einen Planetenträger (112, 122) und ein Sonnenrad (111, 121) aufweist, umfassenden Getriebeeinheit (1),
- einer der Getriebeeinheit (1) zugeordneten ersten Welle, die einen mit einer Arbeitsmaschinen- oder Rotorwelle verbindbaren Kupplungsflansch (14) aufweist und über den Planetenträger (112) gelagert ist,
- einem die Getriebeeinheit (1) und eine mit einer zweiten Welle (16) der Getriebeeinheit (1) verbundene Motor- oder Generatoreinheit (2) umgebenden Getriebegehäuse (15),
- einen drehfest mit einer Rotorhohlwelle (23) verbundenen Rotor (22) der Motor- oder Generatoreinheit (2), wobei die Rotorhohlwelle (23) axial von der zweiten Welle (16) der Getriebeeinheit (1) beabstandet ist,
- einer zwischen der Rotorhohlwelle (23) und der zweiten Welle (16) der Getriebeeinheit (1) angeordneten lösbaren Flanschverbindung (231), deren getriebeseitiges Ende mit einer Getriebehohlwelle (162) verbunden ist,
- einem motor- oder generatorseitigen Endabschnitt der zweiten Welle (16) der Getriebeeinheit (1), der von der Getriebehohlwelle (162) konzentrisch umgeben und mit dieser über eine innerhalb der Getriebehohlwelle (162) angeordnete Kupplung oder Spannverbindung (163) verbunden ist,
- einen zwischen Getriebeeinheit (1) und Motor- oder Generatoreinheit (2) angeordneten Getriebegehäusestutzen (152), der einen Lagersitz für eine der zweiten Welle (16) der Getriebeeinheit (1) zugeordnete Lageranordnung (161) bildet, mittels derer auch die Rotorhohlwelle (23) gelagert ist,
**dadurch gekennzeichnet dass** die lösbaren Flanschverbindung (231) elektrisch isolierend ist und der Getriebegehäusestutzen (152) einen getriebeseitigen Endabschnitt der Getriebehohlwelle (162) konzentrisch umgibt.

2. Antriebssystem nach Anspruch 1,
bei dem ein rotorseitiges Ende der Flanschverbindung (231) an die Rotorhohlwelle (23) angeformt ist.

3. Antriebssystem nach einem der Ansprüche 1 oder 2,
bei dem an einem motor- oder getriebeseitigen Ende der Getriebehohlwelle (162) ein mit einem rotorseitigen Ende der Flanschverbindung (231) lösbar verbundener Aufsteckflansch (164) montiert ist.

4. Antriebssystem nach einem der Ansprüche 1 bis 3,
bei dem die Getriebehohlwelle (162) mit der zweiten Welle (16) der Getriebeeinheit (1) durch eine Zahnkupplung mit Kurz- oder Bogenverzahnung verbunden ist.

5. Antriebssystem nach einem der Ansprüche 1 bis 3,
bei dem die Getriebehohlwelle (162) mit der zweiten Welle (16) der Getriebeeinheit (1) durch einen Innenspannsatz verbunden ist.

6. Antriebssystem nach Anspruch 5,
bei dem der Innenspannsatz zumindest jeweils einen Außenring und einen Innenring umfaßt, die zueinander korrespondierende konische Kontaktflächen aufweisen und mittels mehrerer sich axial erstreckender Spannschrauben gegeneinander verspannbar sind.

7. Antriebssystem nach Anspruch 6,
bei dem an einem motor- oder getriebeseitigen Ende der Getriebehohlwelle (162) ein mit einem rotorseitigen Ende der Flanschverbindung (231) lösbar verbundener Aufsteckflansch (164) angeordnet ist, und bei dem durch Verspannung des zumindest einen Außenrings und des zumindest einen Innenrings sowohl die zweite Welle (16) der Getriebeeinheit (1) und die Getriebehohlwelle (162) als auch die Getriebehohlwelle (162) und der Aufsteckflansch (164) miteinander verbunden sind.

8. Antriebssystem nach Anspruch 6,
bei dem der Aufsteckflansch mittels einer Paßfederverbindung mit der Getriebehohlwelle verbunden ist, und bei dem die Paßfederverbindung axial auf den Innenspannsatz ausgerichtet ist.

9. Antriebssystem nach Anspruch 7,
bei dem durch Verspannung des zumindest einen Außenrings und des zumindest einen Innenrings sowohl die zweite Welle der Getriebeeinheit und die Getriebehohlwelle als auch die Getriebehohlwelle und der Aufsteckflansch kraftschlüssig miteinander verbunden sind.

10. Antriebssystem nach einem der Ansprüche 1 oder 2,
bei dem die zweite Welle (16) der Getriebeeinheit (1) an ihrem motor- oder generatorseitigen Endabschnitt einen Flansch aufweist, und bei dem die Getriebehohlwelle (162) mit der zweiten Welle (16) der Getriebeeinheit (1) durch einen Außenspannsatz verbunden ist, und bei dem der Außenspannsatz einen Flansch umfaßt, der mit einem rotorseitigen Ende der Flanschverbindung (231) verbunden ist.

11. Antriebssystem nach einem der Ansprüche 1 bis 10,
bei dem die zweite Welle (16) der Getriebeeinheit (1) axial im wesentlichen zur Hälfte von der Generatorhohlwelle (162) umgeben ist.

12. Antriebssystem nach einem der Ansprüche 1 bis 11,
bei dem die am Getriebegehäusestutzen (152) angeordnete Lageranordnung (161) axial mittig auf die mit einem Sonnenrad (121) verbundene zweite Welle (16) der Getriebeeinheit (1) ausgerichtet ist.

13. Antriebssystem nach einem der Ansprüche 1 bis 12,
bei dem die am Getriebegehäusestutzen (152) angeordnete Lageranordnung (161) ein doppelreihiges Lager in X-Anordnung umfaßt.

14. Antriebssystem nach einem der Ansprüche 1 bis 13,
bei dem die Rotorhohlwelle (23) und die zweite Welle (16) der Getriebeeinheit (1) im wesentlichen ausschließlich mittels der Lageranordnung (161) am Getriebegehäusestutzen (152) gelagert sind.

15. Antriebssystem nach einem der Ansprüche 1 bis 14,
bei dem der Getriebegehäusestutzen (152) an einen zwischen Getriebeeinheit (1) und Motor- oder Generatoreinheit (2) angeordneten Gehäusezwischenflansch (151) angeformt ist.

16. Antriebssystem nach Anspruch 15,
bei dem der Gehäusezwischenflansch (151) einen Lagersitz für ein motor- oder generatorseitiges Planetenträgerlager (126) aufweist.

17. Antriebssystem nach einem der Ansprüche 15 oder 16,
bei dem ein Statormantel (211) der Motor- oder Generatoreinheit (2) am Gehäusezwischenflansch (151) montiert ist.

18. Antriebssystem nach einem der Ansprüche 15 oder 16,
bei dem ein Hohlrad (124) einer motor- oder generatorseitigen Planetenradstufe (12) am Gehäusezwischenflansch (151) montiert ist.

19. Antriebssystem nach einem der Ansprüche 15 bis 17,
bei dem der Gehäusezwischenflansch (151) jeweils einen Flanschfortsatz (1511, 1512) aufweist, an dem jeweils ein Statormantel (211) der Motor- oder Generatoreinheit (2) oder ein Hohlrad (124) einer motor- oder generatorseitigen Planetenradstufe (12) montiert ist.

20. Antriebssystem nach Anspruch 19,
bei dem der dem Statormantel (211) zugeordnete Flanschfortsatz (1512) und der dem Hohlrad (124) zugeordnete Flanschfortsatz (1511) axial voneinander beabstandet sind.

21. Antriebssystem nach einem der Ansprüche 1 bis 20,
bei dem die ersten Welle der Getriebeeinheit einen mit der Arbeitsmaschinen- oder Rotorwelle elastisch verbindbaren Kupplungsflansch (14) aufweist, und bei dem das Getriebegehäuse (15) eine kardanische umfangssymmetrische oder teilsymmetrische Aufhängung (13) zur Verbindung mit einem tragenden Strukturelement (7) der Windkraftanlage aufweist.

22. Antriebssystem nach Anspruch 21,
bei dem die kardanische Aufhängung durch eine das Getriebegehäuse (15) vollumfänglich radial umgebende Ringstütze (13) gebildet ist, die in Umfangsrichtung mehrere im wesentlichen äquidistant angeordnete Bohrungen (131) aufweist, in die elastische Bolzen eingesetzt sind, die mit einer korrespondierenden Drehmomentstütze am tragenden Strukturelement (7) der Windkraftanlage verbindbar sind.

23. Antriebssystem nach Anspruch 22,
bei dem die korrespondierende Drehmomentstütze ein Ringelement mit in Umfangsrichtung im wesentlichen äquidistant angeordneten Bohrungen umfaßt, in welche die elastischen Bolzen einsetzbar sind.

24. Antriebssystem nach Anspruch 23,
bei dem die korrespondierende Drehmomentstütze zwei symmetrisch oder asymmetrisch angeformte Stützarme (71, 72) umfaßt, die jeweils mit einem Endabschnitt in eine Aufnahme (73, 74) am tragenden Strukturelement (7) einsetzbar und dort mit diesem verbindbar sind.

25. Antriebssystem nach Anspruch 21,
bei dem die kardanische Aufhängung durch zwei das Getriebegehäuse teilumfänglich radial umgebende Ringssegmentstützen (13a, 13b) gebildet ist, die jeweils in Umfangsrichtung mehrere im wesentlichen äquidistant angeordnete Bohrungen (131) aufweisen, in die elastische Bolzen eingesetzt sind, die mit korrespondierenden Drehmomentstützen am tragenden Strukturelement (7) der Windkraftanlage verbindbar sind.

26. Antriebssystem nach Anspruch 25,
bei dem die korrespondierenden Drehmomentstützen jeweils ein Ringsegment (13a, 13b) mit in Umfangsrichtung im wesentlichen äquidistant angeordneten Bohrungen (131) umfassen, in welche die elastischen Bolzen einsetzbar sind.

27. Antriebssystem nach Anspruch 26,
bei dem die korrespondierende Drehmomentstützen jeweils einen Stützarm (71a, 72a) umfassen, der mit einem Endabschnitt in eine Aufnahme (73, 74) am tragenden Strukturelement (7) einsetzbar und dort mit diesem verbindbar ist.

28. Antriebssystem nach einem der Ansprüche 22 bis 27,
bei dem die elastischen Bolzen der kardanischen Aufhängung axial demontierbare Elastomerbolzen sind, und bei dem der Kupplungsflansch in Umfangsrichtung mehrere im wesentlichen äquidistant angeordnete Bohrungen aufweist, in die axial demontierbare Elastomerbolzen eingesetzt sind, die mit einem korrespondierenden Arbeitsmaschinen- oder Rotorwellenkupplungsflansch verbindbar sind.

29. Antriebssystem nach Anspruch 28,
bei dem bei demontierten Elastomerbolzen der kardanischen Aufhängung und des Kupplungsflansches eine hinsichtlich einer Wellenanordnung der Getriebeeinheit radiale Aus- und/oder Einbaurichtung des Antriebssystems freigegeben ist.

30. Antriebssystem nach einem der Ansprüche 21 bis 29,
bei dem Zusatzaggregate der Getriebeeinheit direkt am tragenden Strukturelement der Windkraftanlage montiert und über die kardanische Aufhängung sowie eine elastische Kupplung zwischen Arbeitsmaschinen- oder Rotorwelle und der ersten Welle der Getriebeeinheit vom Getriebegehäuse entkoppelt sind.

31. Antriebssystem nach einem der Ansprüche 21 bis 30,
bei dem die Getriebeeinheit (1) ein erstes (115) und ein zweites Hauptlager (116) umfaßt, mittels derer die erste Welle der Getriebeeinheit gelagert ist, und die zwischen Planetenträgerwangen und Getriebegehäuse (15) angeordnet sind.

32. Antriebssystem nach einem der Ansprüche 21 bis 31,
bei dem die Getriebeeinheit (1) eine erste (11) und zweite Planetenradstufe (12) in koaxialer Bauform umfaßt.

33. Antriebssystem nach einem der Ansprüche 1 bis 32,
bei dem mit der Rotorhohlwelle (23) eine Bremsscheibe (233) drehfest verbunden ist.

34. Antriebssystem nach Anspruch 33,
bei dem die Bremsscheibe an einer von der Getriebeeinheit abgewandten Stirnseite der Motor- oder Generatoreinheit angeordnet.ist.

35. Antriebssystem nach einem der Ansprüche 1 bis 34,
bei dem motor- oder generatorseitige Lager der Getriebeeinheit elektrisch isolierend ausgeführt sind.

36. Antriebssystem nach einem der Ansprüche 1 bis 35,
bei dem die Getriebeeinheit mit einer Generatoreinheit verbunden ist, und bei dem die erste Welle der Getriebeeinheit eine getriebeseitige Antriebswelle ist, und bei dem die zweite Welle der Generatoreinheit eine getriebeseitige Abtriebswelle, und bei dem der Kupplungsflansch der getriebeseitigen Antriebswelle mit einer Rotorwelle verbindbar ist.

## Claims

1. Drive system for a wind turbine, comprising
- a gearing unit (1) comprising at least one planetary gear stage (11, 12) having a ring gear (114, 124), a plurality of planetary gears (113, 123), a planetary gear carrier (112, 122) and a sun gear (111, 121),
- a first shaft assigned to the gearing unit (1), which shaft has a coupling flange (14) connectable to a working machine or rotor shaft and is supported via the planetary gear carrier (112),
- a gearbox (15) enclosing the gearing unit (1) and a motor or generator unit (2) connected to a second shaft (16) of the gearing unit (1),
- a rotor (22) of the motor or generator unit (2), which rotor is non-rotatably connected to a hollow rotor shaft (23), said hollow rotor shaft (23) being spaced axially apart from the second shaft (16) of the gearing unit (1),
- a detachable flanged connection (231) disposed between the hollow rotor shaft (23) and the second shaft (16) of the gearing unit (1), the gearing-side end of which connection is connected to a hollow gear shaft (162),
- a motor- or generator-side end section of the second shaft (16) of the gearing unit (1), which end section is concentrically enclosed by the hollow gear shaft (162) and is connected thereto via a coupling or clamping connection (163) disposed inside the hollow gear shaft (162),
- a gearbox stub (152) disposed between gearing unit (1) and motor or generator unit (2), said stub forming a bearing seat for a bearing arrangement (161) assigned to the second shaft (16) of the gearing unit (1), the hollow rotor shaft (23) also being supported by means of said bearing arrangement, **characterised in that** the detachable flanged connection (231) is electrically isolating and the gearbox stub (152) concentrically encloses a gearing-side end section of the hollow gear shaft (162).

2. Drive system according to claim 1,
wherein a rotor-side end of the flanged connection (231) is integrally formed on the hollow rotor shaft (23).

3. Drive system according to one of claims 1 or claim 2,
wherein a socket flange (164) detachably connected to a rotor-side end of the flanged connection (231) is mounted on a motor- or gearing-side end of the hollow gear shaft (162).

4. Drive system according to one of claims 1 to 3,
wherein the hollow gear shaft (162) is connected to the second shaft (16) of the gearing unit (1) by a geared coupling with short or curved toothing.

5. Drive system according to one of claims 1 to 3,
wherein the hollow gear shaft (162) is connected to the second shaft (16) of the gearing unit (1) by an inner clamping set.

6. Drive system according to claim 5,
wherein the inner clamping set comprises at least one outer ring and one inner ring which have mutually corresponding conical contact surfaces and can be braced against one another by means of a plurality of axially extending clamping bolts.

7. Drive system according to claim 6,
wherein a socket flange (164) detachably connected to a rotor-side end of the flanged connection (231) is disposed on a motor- or gearing-side end of the hollow gear shaft (162), and wherein, by bracing the at least one outer ring and the at least one inner ring, both the second shaft (16) of the gearing unit (1) and the hollow gear shaft (162), and the hollow gear shaft (162) and the socket flange (164), can be interconnected.

8. Drive system according to claim 6,
wherein the socket flange is connected to the hollow gear shaft by means of a keyed joint, and wherein the keyed joint is aligned axially to the inner clamping set.

9. Drive system according to claim 7,
wherein, by bracing the at least one outer ring and the at least one inner ring, both the second shaft of the gearing unit and the hollow gear shaft, and the hollow gear shaft and the socket flange, can be interconnected in a force-fit manner.

10. Drive system according to one of claims 1 or claim 2,
wherein the second shaft (16) of the gearing unit (1) has a flange on its motor- or generator-side end section, and wherein the hollow gear shaft (162) is connected to the second shaft (16) of the gearing unit (1) by an outer clamping set, and wherein the outer clamping set comprises a flange which is connected to a rotor-side end of the flanged connection (231).

11. Drive system according to one of claims 1 to 10,
wherein the second shaft (16) of the gearing unit (1) is essentially half-enclosed axially by the hollow generator shaft (162).

12. Drive system according to one of claims 1 to 11,
wherein the bearing arrangement (161) disposed on the gearbox stub (152) is axially aligned centrally to the second shaft (16) of the gearing unit (1), which shaft is connected to a sun gear (121).

13. Drive system according to one of claims 1 to 12,
wherein the bearing arrangement (161) disposed on the gearbox stub (152) comprises a double-row bearing in X-configuration.

14. Drive system according to one of claims 1 to 13,
wherein the hollow rotor shaft (23) and the second shaft (16) of the gearing unit (1) are essentially supported solely by means of the bearing arrangement (161) on the gearbox stub (152).

15. Drive system according to one of claims 1 to 14,
wherein the gearbox stub (152) is integrally formed on an intermediate housing flange (151) disposed between gearing unit (1) and motor- or generator unit (2).

16. Drive system according to claim 15,
wherein the intermediate housing flange (151) has a bearing seat for a motor- or generator-side planetary gear carrier bearing (126).

17. Drive system according to claim 15 or claim 16,
wherein a stator casing (211) of the motor or generator unit (2) is mounted on the intermediate housing flange (151).

18. Drive system according to claim 15 or claim 16,
wherein a ring gear (124) of a motor- or generator-side planetary gear stage (12) is mounted on the intermediate housing flange (151).

19. Drive system according to one of claims 15 to 17,
wherein the intermediate housing flange (151) has flange extensions (1511, 1512) on which are mounted a stator casing (211) of the motor- or generator unit (2) or a ring gear (124) of a motor- or generator-side planetary gear stage (12).

20. Drive system according to claim 19,
wherein the flange extension (1512) assigned to the stator casing (211) and the flange extension (1511) assigned to the ring gear (124) are spaced axially apart from one another.

21. Drive system according to one of claims 1 to 20,
wherein the first shaft of the gearing unit has a coupling flange (14) flexibly connectable to the working machine or rotor shaft, and wherein the gearbox (15) has a circumferentially symmetrical or partially symmetrical cardanic suspension (13) for connection to a supporting structural element (7) of the wind turbine.

22. Drive system according to claim 21,
wherein the cardanic suspension is constituted by an annular support (13) radially enclosing the gearbox (15) in a fully circumferential manner and having in the circumferential direction a plurality of essentially equidistantly disposed bores (131) in which are inserted the flexible bolts which can be connected to corresponding torque supports on the supporting structural element (7) of the wind turbine.

23. Drive system according to claim 22,
wherein the corresponding torque support comprises an annular element with bores disposed essentially equidistantly in the circumferential direction, into which bores the flexible bolts can be inserted.

24. Drive system according to claim 23,
wherein the corresponding torque support comprises two symmetrically or asymmetrically moulded support arms (71, 72) which can each be inserted with an end section in a receptacle (73, 74) on the supporting structural element (7) where they can be connected thereto.

25. Drive system according to claim 21,
wherein the cardanic suspension is constituted by two annular segment supports (13a, 13b) radially enclosing the gearbox in a partially circumferential manner and each having a plurality of bores (131) disposed essentially equidistantly in the circumferential direction into which are inserted the flexible bolts which can be connected to corresponding torque supports on the supporting structural element (7) of the wind turbine.

26. Drive system according to claim 25,
wherein the corresponding torque supports each comprise an annular segment (13a, 13b) with bores (131) disposed essentially equidistantly in the circumferential direction into which the flexible bolts can be inserted.

27. Drive system according to claim 26,
wherein the corresponding torque supports each comprise a support arm (71a, 72a) which can be inserted with an end section into a receptacle (73, 74) on the supporting structural element (7) where it can be connected thereto.

28. Drive system according to one of claims 22 to 27,
wherein the flexible bolts of the cardanic suspension are axially demountable elastomer bolts, and wherein the coupling flange has, in the circumferential direction, a plurality of essentially equidistantly disposed bores into which axially demountable elastomer bolts are inserted which can be connected to a corresponding working machine or rotor shaft coupling flange.

29. Drive system according to claim 28,
wherein, when the elastomer bolts of the cardanic suspension and of the coupling flange are demounted, a radial removal and/or installation direction of the drive system in respect of a shaft arrangement of the gearing unit is left clear.

30. Drive system according to one of claims 21 to 29,
wherein ancillary equipment of the gearing unit is mounted directly on the supporting structural element of the wind turbine and is decoupled from the gearbox via the cardanic suspension and a flexible coupling between working machine or rotor shaft and the first shaft of the gearing unit.

31. Drive system according to one of claims 21 to 30,
wherein the gearing unit (1) comprises a first (115) and a second main bearing (116) by means of which the first shaft of the gearing unit is supported and which are disposed between planetary gear carrier cheeks and gearbox (15).

32. Drive system according to one of claims 21 to 31,
wherein the gearing unit (1) comprises a first (11) and second planetary gear stage (12) of coaxial construction.

33. Drive system according to one of claims 1 to 32,
wherein a brake disk (233) is non-rotatably connected to the hollow rotor shaft (23).

34. Drive system according to claim 33,
wherein the brake disk is disposed on an end of the motor or generator unit facing away from the gearing unit.

35. Drive system according to one of claims 1 to 34,
wherein motor- or generator-side bearings of the gearing unit are of electrically isolating design.

36. Drive system according to one of claims 1 to 35,
wherein the gearing unit is connected to a generator unit, and wherein the first shaft of the gearing unit is a gearing-side drive shaft, and wherein the second shaft of the generator unit is a gearing-side drive shaft, and wherein the coupling flange of the gearing-side drive shaft can be connected to a rotor shaft.

## Revendications

1. Système d'entraînement d'une éolienne comprenant
- un groupe 1 de transmission comprenant au moins un étage ( 11, 12 ) de roue satellite qui a une roue ( 114, 124 ) à denture intérieure, plusieurs roues ( 113, 123 ) satellites, une cage ( 112, 122 ) de transmission planétaire et une roue ( 111, 121 ) solaire,
- un premier arbre qui est associé au groupe ( 1 ) de transmission, qui a une bride ( 14 ) d'accouplement pouvant être reliée à un arbre de machine fournissant du travail ou à un arbre de rotor et qui est supporté par la cage ( 112 ) de transmission planétaire,
- un carter ( 15 ) de transmission, entourant le groupe ( 1 ) de transmission et un groupe ( 2 ) moteur ou génératrice relié à un deuxième arbre ( 16 ) du groupe ( 1 ) de transmission,
- un rotor ( 22 ), solidaire en rotation d'un arbre ( 23 ) creux rotorique, du groupe ( 2 ) moteur ou génératrice, l'arbre ( 23 ) creux rotorique étant à distance axialement du deuxième arbre ( 16 ) du groupe ( 1 ) de transmission,
- une liaison ( 231 ) par bride amovible, qui est disposée entre l'arbre ( 23 ) creux rotorique et le deuxième arbre ( 16 ) du groupe de transmission et dont l'extrémité du côté de la transmission est reliée à un arbre ( 162 ) creux de transmission,
- un bout du côté moteur ou génératrice du deuxième arbre ( 16 ) du groupe ( 1 ) de transmission, qui est entouré concentriquement de l'arbre ( 162 ) creux de transmission et qui est relié à celui-ci par un accouplement ou par une liaison ( 163 ) de serrage disposée à l'intérieur de l'arbre ( 162 ) creux de transmission,
- un appui du carter de transmission, qui est disposé entre le groupe ( 1 ) de transmission et le groupe ( 2 ) moteur ou génératrice et qui forme un siège de palier pour un agencement ( 161 ) de palier associé au deuxième arbre ( 16 ) du groupe ( 1 ) de transmission, agencement au moyen duquel l'arbre ( 23 ) creux rotorique est supporté également, **caractérisé en ce que** la liaison ( 231 ) amovible par bride est isolante électriquement et l'appui ( 152 ) du carter de transmission entoure concentriquement un bout, du côté de la transmission, de l'arbre ( 162 ) creux de transmission.

2. Système d'entraînement suivant la revendication 1,
dans lequel une extrémité du côté du rotor de la liaison ( 231 ) par bride est formée sur l'arbre ( 23 ) creux rotorique.

3. Système d'entraînement suivant l'une des revendications 1 ou 2,
dans lequel à un bout, du côté du moteur ou de la transmission, de l'arbre ( 162 ) creux de transmission est montée une bride ( 164 ) d'emmanchement reliée de manière amovible à une extrémité, du côté du rotor, de la liaison ( 231 ) par bride.

4. Système d'entraînement suivant l'une des revendications 1 à 3,
dans lequel l'arbre ( 162 ) creux de transmission est relié au deuxième arbre ( 16 ) du groupe ( 1 ) de transmission par un accouplement à dents ayant une denture courte ou arquée.

5. Système d'entraînement suivant l'une des revendications 1 à 3,
dans lequel l'arbre ( 162 ) creux de transmission est relié au deuxième arbre ( 16 ) du groupe ( 1 ) de transmission par un ensemble de serrage intérieur.

6. Système d'entraînement suivant la revendication 5,
dans lequel l'ensemble de serrage intérieur comprend au moins respectivement un anneau extérieur et un anneau intérieur, qui ont des surfaces de contact coniques qui se correspondent et peuvent être bloqués l'un par rapport à l'autre au moyen de plusieurs vis de serrage s'étendant axialement.

7. Système d'entraînement suivant la revendication 6,
dans lequel au bout, du côté du moteur ou de la transmission, de l'arbre ( 162 ) creux de transmission est montée une bride ( 164 ) d'emmanchement reliée de manière amovible à une extrémité, du côté du rotor, de la liaison ( 231 ) par bride et dans lequel, par serrage du au moins un anneau extérieur et du au moins un anneau intérieur, tant le deuxième arbre ( 16 ) du groupe ( 1 ) de transmission et l'arbre ( 162 ) creux de transmission qu'également l'arbre ( 162 ) creux de transmission et la bride ( 164 ) d'emmanchement sont reliés l'un à l'autre.

8. Système d'entraînement suivant la revendication 6,
dans lequel la bride d'emmanchement est reliée à l'arbre creux de transmission au moyen d'une liaison par clavette dans lequel la liaison par clavette est dirigée axialement sur l'ensemble de serrage intérieur.

9. Système d'entraînement suivant la revendication 7,
dans lequel, par serrage du au moins un anneau extérieur et du au moins un anneau intérieur, tant le deuxième arbre du groupe de transmission et l'arbre creux de transmission qu'également l'arbre creux de transmission et la bride d'emmanchement sont reliés entre eux à complémentarité de force.

10. Système d'entraînement suivant l'une des revendications 1 ou 2,
dans lequel le deuxième arbre ( 16 ) du groupe ( 1 ) d'entraînement a, sur son bout du côté du moteur ou de la génératrice, une bride et dans lequel l'arbre ( 162 ) creux de transmission est relié au deuxième arbre ( 16 ) du groupe ( 1 ) de transmission par un ensemble de serrage extérieur et dans lequel l'ensemble de serrage extérieur comprend une bride qui est reliée à une extrémité, du côté du rotor, de la liaison ( 231 ) par bride.

11. Système d'entraînement suivant l'une des revendications 1 à 10,
dans lequel le deuxième arbre ( 16 ) du groupe ( 1 ) de transmission est entouré axialement sensiblement pour moitié par l'arbre ( 162 ) creux de génératrice.

12. Système d'entraînement suivant l'une des revendications 1 à 11,
dans lequel l'agencement ( 161 ) de palier disposé sur l'appui ( 152 ) du carter de transmission est dirigé axialement au milieu sur le deuxième arbre ( 16 ), relié à la roue ( 121 ) solaire, du groupe ( 1 ) d'entraînement.

13. Système d'entraînement suivant l'une des revendications 1 à 12,
dans lequel l'agencement ( 161 ) de palier, monté sur l'appui ( 152 ) du carter de transmission, comprend un palier à double rang en agencement X.

14. Système d'entraînement suivant l'une des revendications 1 à 13,
dans lequel l'arbre ( 23 ) creux rotorique et le deuxième arbre ( 16 ) de l'unité ( 1 ) de transmission sont montés sur l'appui ( 152 ) de carter de transmission sensiblement exclusivement au moyen de l'agencement ( 161 ) de palier.

15. Système d'entraînement suivant l'une des revendications 1 à 14,
dans lequel l'appui ( 152 ) du carter de transmission est formé sur une bride ( 151 ) intermédiaire de carter disposée entre le groupe ( 1 ) de transmission et le groupe ( 2 ) moteur ou génératrice.

16. Système d'entraînement suivant la revendication 15,
dans lequel la bride ( 151 ) intermédiaire de carter a un siège de palier pour un palier ( 126 ) de cage de transmission planétaire du côté du moteur ou de la génératrice.

17. Système d'entraînement suivant l'une des revendications 15 ou 16,
dans lequel une enveloppe ( 211 ) statorique du groupe ( 2 ) moteur ou génératrice est montée sur la bride ( 151 ) intermédiaire de carter.

18. Système d'entraînement suivant l'une des revendications 15 ou 16,
dans lequel une roue ( 124 ) à denture intérieure d'un étage ( 12 ) de roue satellite du côté du moteur ou de la génératrice est montée sur la bride ( 151 ) intermédiaire du carter.

19. Système d'entraînement suivant l'une des revendications 15 à 17,
dans lequel la bride ( 151 ) intermédiaire de carter a respectivement un prolongement ( 1511, 1512 ) de bride sur lequel est montée respectivement une enveloppe ( 211 ) statorique du groupe ( 2 ) moteur ou génératrice ou une roue ( 124 ) à denture intérieure d'un étage ( 12 ) de roue satellite du côté du moteur ou de la génératrice.

20. Système d'entraînement suivant la revendication 19,
dans lequel le prolongement ( 1512 ) de bride associé à l'enveloppe ( 211 ) statorique et le prolongement ( 1511 ) de bride associé à la roue ( 124 ) à denture intérieure sont à distance axialement l'un de l'autre.

21. Système d'entraînement suivant l'une des revendications 1 à 20,
dans lequel le premier arbre du groupe de transmission a une bride ( 14 ) d'accouplement, pouvant être reliée élastiquement à l'arbre de la machine fournissant du travail ou à l'arbre du rotor et dans lequel le carter ( 15 ) de transmission a une suspension à symétrie périphérique à la cardan ou partiellement symétrique de liaison à un élément ( 7 ) de structure porteur de l'éolienne.

22. Système d'entraînement suivant la revendication 21,
dans lequel la suspension à la cardan est formée par un appui ( 13 ) annulaire entourant radialement sur tout le pourtour le carter ( 15 ) de transmission, appui qui a dans la direction périphérique plusieurs trous ( 131 ) qui sont sensiblement équidistants et dans lesquels sont insérés des axes élastiques qui peuvent être reliés à un appui de couple de rotation correspondant sur l'élément ( 7 ) de structure porteur de l'éolienne.

23. Système d'entraînement suivant la revendication 22,
dans lequel l'appui de couple de rotation correspondant comprend un élément annulaire ayant des trous sensiblement équidistants dans la direction du pourtour, trous dans lesquels peuvent être insérés les axes élastiques.

24. Système d'entraînement suivant la revendication 23,
dans lequel les appuis de couple de rotation correspondant comprennent deux bras ( 71, 72 ) d'appui formés de manière symétrique ou de manière dissymétrique, qui peuvent être insérés respectivement par un tronçon d'extrémité dans un logement ( 73, 74 ) de l'élément ( 7 ) de structure porteur et y être reliés à celui-ci.

25. Système d'entraînement suivant la revendication 21,
dans lequel la suspension à la cardan est formée par deux appuis ( 13a, 13b ) de segment annulaire entourant radialement, sur une partie du pourtour, le carter de transmission, appuis qui ont respectivement dans la direction du pourtour plusieurs trous ( 131 ) sensiblement équidistants dans lesquels sont insérés des axes élastiques qui peuvent être reliés à des appuis de couple de rotation correspondants sur l'élément ( 7 ) de structure porteur de l'éolienne.

26. Système d'entraînement suivant la revendication 25,
dans lequel les appuis de couple de rotation correspondants comprennent respectivement un segment ( 13a, 13b ) annulaire ayant des trous ( 131 ) sensiblement équidistants dans la direction du pourtour, dans lesquels peuvent être insérés les axes élastiques.

27. Système d'entraînement suivant la revendication 26,
dans lequel les appuis de couple de rotation correspondants comprennent respectivement un bras ( 71a, 72a ) d'appui, qui peut être inséré par un tronçon d'extrémité dans un logement de l'élément ( 7 ) de structure porteur et y être relié à celui-ci.

28. Système d'entraînement suivant l'une des revendications 22 à 27
dans lequel les axes élastiques de la suspension à la cardan sont des axes en élastomère pouvant être démontés axialement et dans lequel, la bride d'accouplement a plusieurs trous sensiblement équidistante dans la direction du pourtour, dans lesquels des axes en élastomère pouvant être démontés axialement sont insérés, axes qui peuvent être reliés à une bride d'accouplement correspondante de la machine fournissant du travail ou de l'arbre du rotor.

29. Système d'entraînement suivant la revendication 28,
dans lequel, lorsque les axes en élastomère de la suspension à la cardan et de la bride d'accouplement sont démontés, une direction radiale de démontage et/ou de montage du système d'entraînement est dégagée en ce qui concerne un agencement d'arbre du groupe de transmission.

30. Système d'entraînement suivant l'une des revendications 21 à 29,
dans lequel des groupes supplémentaires du groupe de transmission sont montés directement sur l'élément de structure porteur de l'éolienne et sont, par la suspension à la cardan ainsi que par un accouplement élastique entre l'arbre de la machine fournissant du travail ou l'arbre du rotor et le premier arbre du groupe de transmission, découplés du carter de transmission.

31. Système d'entraînement suivant l'une des revendications 21 à 30,
dans lequel le groupe ( 1 ) de transmission comprend un premier ( 115 ) et un deuxième palier ( 116 ) principal, au moyen desquels le premier arbre du groupe de transmission est monté et qui sont disposés entre des joues de la cage de transmission planétaire et le carter ( 15 ) de transmission.

32. Système d'entraînement suivant l'une des revendications 21 à 31,
dans lequel le groupe ( 1 ) de transmission comprend sous une forme de construction coaxiale un premier ( 11 ) et un deuxième étages ( 12 ) de roue satellite.

33. Système d'entraînement suivant l'une des revendications 1 à 32,
dans lequel un disque ( 233 ) de frein est solidaire en rotation de l'arbre ( 23 ) rotorique.

34. Système d'entraînement suivant la revendication 33,
dans lequel le disque de frein est monté sur un côté frontal, éloigné du groupe de transmission, du groupe moteur ou génératrice.

35. Système d'entraînement suivant l'une des revendications 1 à 34,
dans lequel des paliers, du côté du moteur ou de la génératrice, du groupe de transmission sont réalisés en étant isolants du point de vue électrique.

36. Système d'entraînement suivant l'une des revendications 1 à 35,
dans lequel le groupe de transmission est relié à un groupe génératrice et dans lequel le premier arbre du groupe de transmission est un arbre d'entrée du côté de la transmission et dans lequel le deuxième arbre du groupe génératrice est un arbre de sortie du côté de la transmission et dans lequel la bride d'accouplement de l'arbre d'entraînement, du côté de la transmission, peut être reliée à un arbre ( 2 ) du rotor.
